# EUROPÄISCHE PATENTSCHRIFT

(11) **EP 3 329 145 B1**
(45) Veröffentlichungstag und Bekanntmachung des Hinweises auf die Patenterteilung: **20.01.2021**
(21) Anmeldenummer: 16714397.3
(22) Anmeldetag: 04.04.2016
(51) Int. Cl.: F16G 3/04, F16G 3/02, B65G 15/30, F16G 11/10, F16G 3/00

(54) **GURT ODER GURTSEGMENT**
BELT OR BELT SEGMENT
SANGLE OU SEGMENT DE SANGLE

(30) Priorität: 29.07.2015 DE 102015214395
(43) Veröffentlichungstag der Anmeldung: 06.06.2018
(73) Patentinhaber: ContiTech Transportbandsysteme GmbH, 30165 Hannover (DE)
(72) Erfinder: HÜLS, Achim, 30890 Barsinghausen (DE); MÖSCHEN-SIEKMANN, Michael, 37176 Nörten-Hardenberg (DE); RIEPL, Stanislaus, 30823 Garbsen (DE)
(74) Vertreter: Finger, Karsten
(86) Internationale Anmeldenummer: PCT/EP2016/057303
(87) Internationale Veröffentlichungsnummer: WO 2017/016687

(56) Entgegenhaltungen:
- WO-A1-01/38756
- US-A- 224 951
- US-A- 3 105 390
- US-A1- 2013 213 774
- US-A1- 2015 075 951

## Beschreibung

Die Erfindung betrifft einen Gurt oder ein Gurtsegment gemäß dem Oberbegriff des Anspruchs 1.

Endlos geschlossene Gurte stellen ringförmige Elemente dar, welche z.B. als Antriebsgurte wie z.B. Keilriemen zur Kraftübertragung verwendet werden können. Sie können jedoch auch als Fördergurte dazu verwendet werden, z.B. lose Schüttgüter zu transportieren. Auch können sie verwendet werden, um als Raupenbänder bei Raupenfahrzeugen der Fortbewegung des Fahrzeugs zu dienen.

Derartige Gurte laufen i.Allg. um einen Antrieb und weitere Führungs- bzw. Stützrollen herum, um die Antriebsleistung auf ein Abtriebselement zu übertragen (Keilriemen), um die Antriebsleistung zum Materialtransport zu nutzen (Fördergurt) oder ein Fahrzeug fortzubewegen (Raupenband). Hierzu weisen diese Gurte zum einen eine vorbestimmte Elastizität auf, welche z.B. durch die Verwendung eines Elastomermaterials wie z.B. Gummi als Basismaterial des Gurtes erreicht werden kann. Zum anderen weisen diese Gurte üblicherweise in Längsrichtung einen oder mehrere Festigkeitsträger zur Übertragung der Zugkräfte in Laufrichtung des Gurtes auf. Dies können z.B. Stahlseile sein, welche eine besonders hohe Kraftübertragung erlaufen, aber auch Textilgewebe sind als Festigkeitsträger üblich.

Derartige Gurte können z.B. als Keilriemen teilweise bereits geschlossen hergestellt werden. In den meisten Fällen z.B. als Fördergurte oder Raupenbänder werden die Gurte aufgrund ihrer Länge in Längsrichtung üblicherweise offen, d.h. als länglicher Körper, herstellt und auch so zum Ort der Anwendung transportiert. Dort werden sie dann endlos geschlossen. Dabei kann ein Gurt über seine beiden Enden in sich selbst endlos geschlossen werden oder es können wenigstens zwei Gurtsegmente hintereinander angeordnet und miteinander zu einem Gurt endlos geschlossen werden. Das endlose Schließen kann z.B. durch Zusammenvulkanisieren der beiden Enden erfolgen, was jedoch ein zerstörungsfreies Trennen der Enden und damit Öffnen des Gurtes z.B. bei Verschleiß oder Beschädigung ausschließt. Ferner ist hierzu ein großer Aufwand vor Ort der Anwendung erforderlich.

Daher ist es bekannt, die Enden der Festigkeitsträger an den beiden Enden des offenen Gurtes vom Elastomermaterial freizulassen bzw. freizulegen und diese mechanisch zu verbinden. Dies kann z.B. dadurch erfolgen, dass die jeweiligen Enden in einem jeweils gemeinsamen Kopplungselement eingeklemmt und die beiden Kopplungselemente z.B. scharnierartig mittels eines Kopplungsstabes miteinander verbunden werden. Durch die Aufteilung dieser mechanischen Klemmverbindung auf zwei Kopplungselemente, die dann als Gelenk gegeneinander verdrehbar sind, soll die Biegsamkeit des Gurtes als Ganzes möglichst wenig eingeschränkt werden. Dies kann insbesondere bei kleinen Umlenkradien erforderlich sein.

Die WO 2012 038 155 A1 sowie die WO 2013 174 666 A1 zeigt einen Gurt aus elastomerem Werkstoff mit einer Festigkeitsträgerlage aus in Längsrichtung des Gurtes verlaufenden, parallel zueinander angeordneten Stahlseilen. Die Stahlseilenden sind jeweils in einem Verbindungselement in Form eines Gurtendekörpers durch Verpressen kraftschlüssig eingeklemmt. Die beiden Verbindungselemente weisen jeweils zueinander hin gerichtete und einander seitlich überlappende zinnenartige Vorsprünge auf, die mit Querbohrungen versehen sind. Durch die Querbohrungen kann ein Kopplungsstab geführt werden, gegenüber dem sich die beiden Gurtendekörper gegeneinander drehen können. Hierdurch wird der Gurt endlos geschlossen und die beiden Gurtenden miteinander scharnierartig gekoppelt.

Nachteilig ist hierbei, dass sich die Gurtendekörper durch das Verpressen beim Einklemmen der Stahlseilenden verziehen können. Dies kann zu einem erhöhten Verschleiß der scharnierartigen Kopplung führen, da sich die Vorsprünge aneinander abreiben können. Hierdurch können die Vorsprünge sowie die Gelenkbohrungen soweit geschwächt werden, dass die scharnierartige Kopplung reißen kann.

Eine Aufgabe der vorliegenden Erfindung ist es, einen Gurt oder ein Gurtsegment der eingangs beschriebenen Art bereit zu stellen, welcher bzw. welches eine erhöhte Lebensdauer gegenüber bekannten Lösungen aufweist. Insbesondere soll der Verzug, der durch das Verpressen der Festigkeitsträgerenden im Verbindungselement entstehen kann, reduziert bzw. vermieden werden.

Die Aufgabe wird erfindungsgemäß durch einen Gurt bzw. ein Gurtsegment mit den Merkmalen gemäß Anspruch 1 gelöst. Vorteilhafte Weiterbildungen sind in den Unteransprüchen beschrieben.

Somit betrifft die vorliegende Erfindung einen Gurt oder ein Gurtsegment mit einer Mehrzahl von in Längsrichtung verlaufenden und parallel zueinander angeordneten Festigkeitsträgern. Die Festigkeitsträger sind vorzugsweise Stahlseile, welche hohe Zugkräfte übertragen können. Unter Längsrichtung ist die Richtung zu verstehen, in der der Gurt bzw. das Gurtsegment endlos geschlossen ist bzw. geschlossen werden kann. Hierzu senkrecht erstreckt sich die Querrichtung, welche auch als Breite bezeichnet werden kann, sowie die Höhe bzw. Dicke des Gurtes bzw. Gurtsegments. Ein Gurt kann durch die Verbindung seiner beiden Enden endlos geschlossen werden oder mehrere Gurtsegmente können über die Verbindung ihrer Enden zu einem Gurt endlos geschlossen werden.

Der Gurt oder das Gurtsegment weist ferner ein Verbindungselement auf, welches ein Ende des Gurtes bzw. des Gurtsegments bildet und zur Verbindung mit einem weiteren Verbindungselement des anderen Endes des Gurts bzw. mit einem Ende eines weiteren Gurtsegments ausgebildet ist. Die Enden der Festigkeitsträger können von dem Verbindungselement gehalten werden. Das Verbindungselement ist vorzugsweise scharnierartig ausgebildet, so dass es mit einem entsprechenden zweiten Verbindungselement des anderen Endes des Gurtes bzw. eines Endes eines weiteren Gurtsegments ein drehbares Gelenk ausbilden kann. Hierdurch kann ermöglicht werden, dass sich dieser Kopplungsbereich einer Umlenkung des geschlossenen Gurtes um z.B. eine Trommel besser anpassen kann.

Vorzugsweise wird diese Kopplung zwischen den Verbindungselementen durch einen Kopplungsstab realisiert, der in Querrichtung durch Bohrungen der zinnenartigen Vorsprünge der Verbindungselemente hindurchgeführt und gesichert ist. Hierdurch kann diese Verbindung auch lösbar ausgebildet sein.

Der Gurt oder das Gurtsegment ist dadurch gekennzeichnet, dass die Enden der Festigkeitsträger mit wenigstens einem Klemmkörper kraftschlüssig verbunden sind, wobei der Klemmkörper von dem Verbindungselement wenigstens in Längsrichtung kraftschlüssig gehalten werden kann. Die geklemmte Verbindung zwischen den Enden der Festigkeitsträger mit dem Klemmkörper und bzw. oder des Klemmkörpers mit dem Verbindungselement kann vorzugsweise durch Verpressen erfolgen.

Der vorliegenden Erfindung liegt dabei der Gedanke zu Grunde, auf diese Weise eine Funktionstrennung der Verbindung der Enden der Festigkeitsträger mit dem Verbindungselement zu erreichen. Denn aus dem Stand der Technik ist es bisher bekannt, die Enden der Festigkeitsträger in dem Material des Verbindungselements direkt durch Verpressen einzuklemmen und so eine kraftschlüssige Verbindung direkt zwischen den Festigkeitsträgern und dem Verbindungselement herzustellen.

Erfindungsgemäß erfolgt nun die geklemmte Verbindung der Enden der Festigkeitsträger mit dem Verbindungselement über einen dazwischenliegenden Klemmkörper, der einen separaten Körper gegenüber dem Verbindungselement darstellt. Der Klemmkörper kann auf diese Weise zum einen mit den Enden der Festigkeitsträger kraftschlüssig verbunden und seinerseits vom Verbindungselement derart aufgenommen werden, dass eine kraftschlüssige Verbindung zwischen Klemmkörper und Verbindungselement in Längsrichtung hergestellt werden kann. Auf diese Weise können sich die Kräfte, die zur Herstellung der kraftschlüssigen Verbindung zwischen den Enden der Festigkeitsträger mit dem Klemmkörper sowie zwischen dem Klemmkörper und dem Verbindungselement z.B. durch Verpressen erforderlich sind, nicht mehr derart auf das Verbindungselement auswirken und dieses ungewollt deformieren wie es bisher beim direkten kraftschlüssigen Verbinden der Enden der Festigkeitsträger mit dem Verbindungselement der Fall sein kann. Hierdurch kann der bisher auftretende Verzug des Verbindungselements vermieden bzw. zumindest reduziert werden. Dies kann auch den hierdurch erzeugten erhöhten Abrieb zweier Verbindungselemente aneinander reduzieren oder sogar vermeiden und damit die Lebensdauer des Gurtes bzw. des Gurtsegments bzw. deren Kopplung erhöhen. Gleichzeitig kann die hohe Haltbarkeit der kraftschlüssigen Verbindung beibehalten werden.

Vorteilhaft ist ferner, dass die Materialien des Klemmkörpers und des Verbindungselements nun auf den jeweiligen Zweck optimiert ausgelegt werden können. Hierzu können unterschiedliche Materialien verwendet werden, z.B. ein Stahl mit guter plastischer Verformbarkeit bei gleichzeitiger hoher Festigkeit für den Klemmkörper und ein harter oder härtbarer Stahl mit hoher Verschleißfestigkeit und Zugfestigkeit für das Verbindungselement. Hierdurch kann die Verformbarkeit des Klemmkörpers beim Verpressen und die Stabilität des Verbindungselements bei Zugbelastung jeweils optimiert werden.

Vorteilhaft ist bei der Anwendung mehrerer Klemmkörper, dass auch bei unterschiedlich langen Festigkeitsträgern bzw. in Längsrichtung unterschiedlich positionierten Klemmkörpern eine gleichmäßig auf die Festigkeitsträger wirkende Kraftübertragung zwischen Festigkeitsträgern und Verbindungselement erreicht werden kann. Mit anderen Worten könnte es bei einer formschlüssigen Verbindung zwischen Klemmkörpern und Verbindungselement auftreten, dass aufgrund von Positionsunterschieden der Klemmkörper in Längsrichtung die formschlüssige Kraftübertragung nicht bei allen Klemmkörpern erfolgt, so dass die übrigen Klemmkörper stärker und u.U. sogar unzulässig hoch belastet werden, was zu einem Reißen einzelner bis aller Festigkeitsträger führen kann. Dies kann durch eine kraftschlüssige Verbindung der Klemmkörper zum Verbindungselement vermieden werden.

Auch könnte ein "loser" d.h. nicht-formschlüssig gehaltener Klemmkörper insbesondere bei der Auslenkung auf einer Umlenktrommel oder dergleichen aus dem Verbindungselement herausgehoben werden, was durch die kraftschlüssige Verbindung ebenfalls vermieden werden kann.

Vorzugsweise ist das Verbindungselement derart ausgebildet, dass es sich vollständig in den Querschnitt des Gurtes bzw. des Gurtsegments integrieren lässt. Hierunter ist zu verstehen, dass das Verbindungselement weder in der Höhe noch in der Breite über die Kontur des Gurtes bzw. Gurtsegments hinausragt. Auf diese Weise kann ein Einfluss auf das Laufverhalten des endlos geschlossenen Gurtes vermieden werden.

Gemäß einem Aspekt der vorliegenden Erfindung ist das Material des Klemmkörpers relativ zum Material des Verbindungselements weicher. Unter "weich" ist hierbei eine bessere Fließfähigkeit oder plastische Verformbarkeit des Materials des Klemmkörpers in Relation zum Material des Verbindungselements zu verstehen. Beispielsweise kann als Material des Klemmkörpers z.B. ein rostfreier Edelstahl wie z.B. V4A verwendet werden. Als Material des Verbindungselements kann z.B. ein harter oder härtbarer Stahl eingesetzt werden. Das vergleichsweise weiche Material des Klemmkörpers begünstigt ein gutes Verpressen sowohl mit den Enden des Festigkeitsträgers wie z.B. Stahlseile als auch mit dem Verbindungselement. Dies kann die Klemmwirkung bei gleicher Presskraft erhöhen bzw. die erforderliche Presskraft zur Herstellung der kraftschlüssigen Verbindung reduzieren. Das Material des Verbindungselements kann durch seine vergleichsweise hohe Härte hohe Belastungen aufnehmen und hierdurch einem Verzug entgegenwirken. Ebenso kann hierdurch grundsätzlich der Verschleiß durch Abrieb reduziert werden.

Vorteilhaft ist dabei auch, dass das Verbindungselement durch ein Guß- oder Schmiedeteil hergestellt werden kann, was die Herstellungskosten reduzieren kann. Der Klemmkörper kann gleichzeitig durch einen kleinen und geometrisch einfachen Körper realisiert werden, was ebenfalls die Herstellungskosten reduzieren kann.

Gemäß einem weiteren Aspekt der vorliegenden Erfindung sind wenigstens zwei Enden der Festigkeitsträger mit einem gemeinsamen Klemmkörper kraftschlüssig verbunden. Ein größerer Klemmkörper kann einfacher herzustellen, zu handhaben und zu montieren sein, was die Herstellung- und Montagekosten reduzieren kann.

Vorzugweise sind alle Enden der Festigkeitsträger in einem gemeinsamen Klemmkörper eingeklemmt. Dies hat den Vorteil, dass die eingeklemmten Festigkeitsträger gemeinsam einfacher zu handhaben sind.

Gemäß einem weiteren Aspekt der vorliegenden Erfindung sind wenigstens zwei Enden der Festigkeitsträger jeweils einzeln mit einem Klemmkörper kraftschlüssig verbunden. Hierdurch können kleinere Klemmkörper verwendet werden, was die Variantenvielfalt reduzieren kann.

Vorzugweise sind alle Enden der Festigkeitsträger jeweils mit einem einzelnen Klemmkörper verbunden. Hierdurch kann ein einheitlicher Klemmkörper wiederholend verwendet werden, auch für Gurte bzw. Gurtsegmente mit einer unterschiedlichen Anzahl von Festigkeitsträgern, was die Herstellungskosten reduzieren kann. Mit anderen Worten kann darauf verzichtet werden, unterschiedliche Klemmkörper für unterschiedliche Gurte bzw. Gurtsegmente herstellen und bereitstellen zu müssen.

Gemäß einem weiteren Aspekt der vorliegenden Erfindung weist das Verbindungselement wenigstens eine Klemmkörperaufnahme auf, in der wenigstens ein mit einem Klemmkörper versehenes Ende eines Festigkeitsträgers aufgenommen und wenigstens in Längsrichtung kraftschlüssig gehalten werden kann. Durch die Klemmkörperaufnahme innerhalb der Abmaße des Verbindungselements kann ein Platz geschaffen werden, an dem der Klemmkörper vom Verbindungselement aufgenommen werden kann, um kraftschlüssig Halt zu finden.

Gemäß einem weiteren Aspekt der vorliegenden Erfindung ist die Klemmkörperaufnahme ausgebildet, einen Klemmkörper aufzunehmen, mit dem die Enden mehrerer Festigkeitsträger kraftschlüssig verbunden sind. Hierdurch kann ein Platz zur Aufnahme eines derartigen Klemmkörpers durch das Verbindungselement geschaffen werden, welche aufgrund ihrer Größe einfacher und schneller herzustellen sein kann als mehrere kleinere Klemmkörperaufnahmen.

Gemäß einem weiteren Aspekt der vorliegenden Erfindung ist die Klemmkörperaufnahme ausgebildet, einen Klemmkörper aufzunehmen, mit dem das Ende eines Festigkeitsträgers kraftschlüssig verbunden ist. Hierdurch wird ein Platz zur Aufnahme eines derartigen Klemmkörpers durch das Verbindungselement geschaffen, d.h. für sehr kleine Klemmkörper, die jeweils nur ein einzelnes Ende eines Festigkeitsträgers in sich aufnehmen können. Vorteilhaft ist hierbei, dass ein sehr kleiner Klemmkörper sich sowohl relativ zum Ende des Festigkeitsträgers als auch zum Verbindungselement hin einfacher und besser verpressen lassen kann als größere Körper, so dass eine bessere und haltbarere kraftschlüssige Verbindung in beide Richtungen, d.h. zu beiden Kontaktpartnern hin, erreicht werden kann.

Gemäß einem weiteren Aspekt der vorliegenden Erfindung weist das Verbindungselement wenigstens zwei Klemmkörperaufnahmen auf, in denen jeweils wenigstens ein mit einem Klemmkörper versehenes Ende eines Festigkeitsträgers aufgenommen und wenigstens in Längsrichtung kraftschlüssig gehalten werden kann, wobei die beiden Klemmkörperaufnahmen in Querrichtung durch einen in Längsrichtung verlaufenden Steg voneinander getrennt sind. Auf diese Weise kann die Übertragung von Zugkräften in Längsrichtung verbessert werden, weil diese nicht nur über die seitlichen Kanten des Verbindungselements sondern auch durch die Stege zwischen den Klemmkörperaufnahmen direkt übertragen werden können. Hierdurch kann die Verformung des Verbindungselements reduziert werden. Gleichzeitig kann die kraftschlüssige Verbindung zwischen den Klemmkörpern seitlich über die in Längsrichtung verlaufenden Stege des Verbindungselements zu diesem erfolgen, wodurch die kraftschlüssige Kontaktfläche zwischen Klemmkörpern und Verbindungselement erhöht und damit die kraftschlüssige Verbindung verbessert werden kann.

Gemäß einem weiteren Aspekt der vorliegenden Erfindung weist das Verbindungselement wenigstens eine Festigkeitsträgerdurchführung auf, durch die wenigstens ein Festigkeitsträger in Längsrichtung in eine Klemmkörperaufnahme geführt werden kann. Der Bereich des Verbindungselements, durch den ein Festigkeitsträger durch die Festigkeitsträgerdurchführung hindurch in die Klemmkörperaufnahme austreten kann, bildet einen Anschlag für einen zusätzlichen formschlüssigen Halt des Klemmkörpers mit dem Verbindungselement.

Gemäß einem weiteren Aspekt der vorliegenden Erfindung ist die Festigkeitsträgerdurchführung als Bohrung durch das Verbindungselement ausgebildet. Auf diese Weise kann die Festigkeitsträgerdurchführung ringsherum vom Material des Verbindungselements umgeben sein, so dass die Kräfte des Kraftschlusses und bzw. oder Formschlusses gleichmäßig übertragen werden können. Hierdurch kann eine größere Stabilität erzeugt werden. Dabei ist es erforderlich, dass die Enden der Festigkeitsträger durch die Bohrungen hindurch in die Klemmkörperaufnahme gesteckt werden, wo sie in entsprechende Aufnahmen des Klemmkörpers eingeführt und dann dort verpresst werden können.

Gemäß einem weiteren Aspekt der vorliegenden Erfindung ist die Festigkeitsträgerdurchführung als Nut durch das Verbindungselement ausgebildet. Mit anderen Worten ist das Material des Verbindungselements in der Höhe unterbrochen, so dass die mit dem Klemmkörper versehenen Enden der Festigkeitsträger von einer Seite in die Nuten eingelegt werden können. Hierbei wird gleichzeitig der Klemmkörper in die Klemmkörperaufnahme eingelegt. Auf diese Weise kann das Verpressen des Klemmkörpers mit dem Ende des Festigkeitsträgers in einem ersten Schritt unabhängig vom Verbindungselement erfolgen, so dass der Klemmkörper mit eingeklemmten Endes des Festigkeitsträgers in das Verbindungselement eingelegt und dort in einem weiteren Schritt mit diesem verpresst werden kann.

Gemäß einem weiteren Aspekt der vorliegenden Erfindung weist der Gurt oder das Gurtsegment ferner eine Abdeckung auf, welche die Nut und bzw. oder die Klemmkörperaufnahme senkrecht zur Längsrichtung verschließen kann. Auf diese Weise können die in die Nuten eingeführten Festigkeitsträger bzw. der in der Klemmkörperaufnahme aufgenommene Klemmkörper dort durch die Abdeckung geschützt werden. Weiterhin können durch die Abdeckung die Reibungswerte des Gelenkes an die Oberfläche des Gurtes und die optische Erscheinung des Gurtes beeinflusst werden.

Gemäß einem weiteren Aspekt der vorliegenden Erfindung ist die Festigkeitsträgerdurchführung in Längsrichtung in entgegengesetzter Richtung zu den Enden der Festigkeitsträger aufgeweitet ausgebildet. Auf diese Weise kann insbesondere bei einer Biegung des Gurtes z.B. an einer Trommel ein Einknicken der Festigkeitsträger vermieden werden. Mit anderen Worten kann erreicht werden, dass die Festigkeitsträger immer in der neutralen Phase verlaufen können. Dies vermeidet Beschädigungen der Festigkeitsträger und erhöht deren Lebensdauer bzw. die Lebensdauer des Gurtes.

Vorzugsweise ist die Aufweitung der Festigkeitsträgerdurchführung kegelförmig ausgebildet. Hierdurch kann der zuvor beschriebenen Vorteile einfach umgesetzt werden. Dies gilt ebenso für eine hyperbolische Form der Aufweitung.

Gemäß einem weiteren Aspekt der vorliegenden Erfindung weist der Gurt bzw. das Gurtsegment einen elastomeren Grundkörperauf, in dem die Festigkeitsträger eingebettet sind, wobei die Enden der Festigkeitsträger von dem Material des elastomeren Grundkörpers freigelegt sind. Das Material des elastomeren Grundkörpers ist vorzugsweise ein vulkanisiertes Gummi. Auf diese Weise kann ein elastischer Gurt bzw. ein elastisches Gurtsegment geschaffen werden. Hierbei ist unter dem Freilegen der Enden der Festigkeitsträger ein äußeres Freilegen von dem elastomeren Material des Grundkörpers zu verstehen, so dass die Enden der Festigkeitsträger wie z.B. Stahlseile nach außen blank erscheinen und aufgrund ihres geringen Querschnitts in die Klemmkörperaufnahmen des Klemmkörpers eingeführt und dort verpresst werden können.

Gemäß einem weiteren Aspekt der vorliegenden Erfindung weist das Verbindungselement an seiner gurtinneren Seite eine halbkreisförmige Einbuchtung auf. Diese Einbuchtung ist halbschalenförmig ausgebildet und entspricht in ihrem Radius dem Radius z.B. einer Trommel, auf dem der Gurt bzw. dessen Kopplungsbereich umgelenkt werden kann. Diese Einbuchtung erleichtert das Abrollen auf der Trommel und kann ein Einknicken der Festigkeitsträger vermeiden helfen, so dass die Festigkeitsträger auch beim Abrollen stets in der neutralen Phase bleiben können. Hierdurch kann ein Einknicken der Festigkeitsträger vermieden und deren Lebensdauer bzw. die Lebensdauer des Gurtes erhöht werden.

Mehrere Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines Verbindungselements an sich gemäß einem ersten Ausführungsbeispiel von oben;
- Fig. 2: einen endlos geschlossenen Gurt mit Verbindungselementen gemäß dem ersten Ausführungsbeispiel von oben;
- Fig. 3: einen Schnitt in Längsrichtung durch die Darstellung der Fig. 2;
- Fig. 4: den endlos geschlossenen Gurt der Fig. 2 mit Abdeckungen;
- Fig. 5: eine perspektivische schematische Darstellung eines Verbindungselements an sich gemäß einem zweiten Ausführungsbeispiel von oben;
- Fig. 6: einen endlos geschlossenen Gurt mit Verbindungselementen gemäß dem zweiten Ausführungsbeispiel von oben;
- Fig. 7: einen Schnitt in Längsrichtung durch die Darstellung der Fig. 6;
- Fig. 8: eine perspektivische schematische Darstellung eines Verbindungselements mit Klemmkörper gemäß einem dritten Ausführungsbeispiel von unten;
- Fig. 9: eine durchsichtige Darstellung der Fig. 8;
- Fig. 10: eine perspektivische schematische Darstellung eines Verbindungselements an sich gemäß einem vierten Ausführungsbeispiel von unten;
- Fig. 11: eine durchsichtige Darstellung der Fig. 10;
- Fig. 12: einen endlos geschlossenen Gurt mit Verbindungselementen gemäß dem vierten Ausführungsbeispiel von unten; und
- Fig. 13: eine perspektivische schematische Darstellung des Verbindungselements gemäß dem vierten Ausführungsbeispiel mit Festigkeitsträgern und Klemmkörpern von oben.

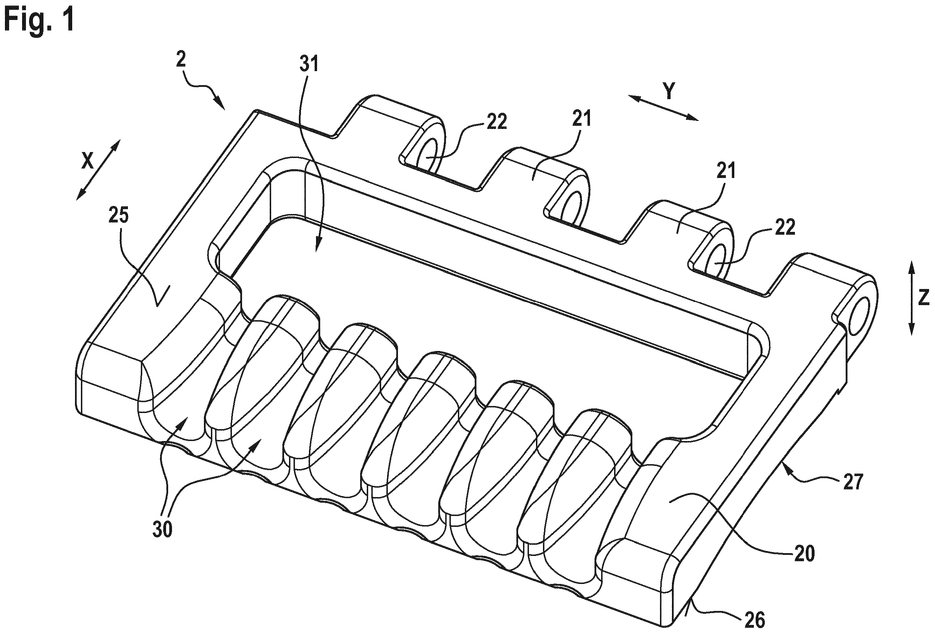

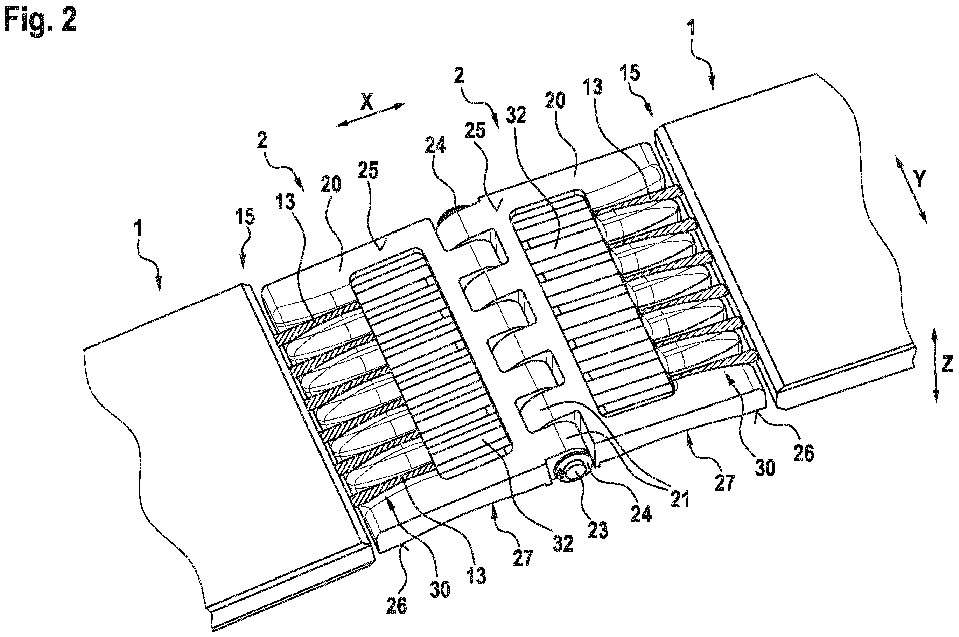

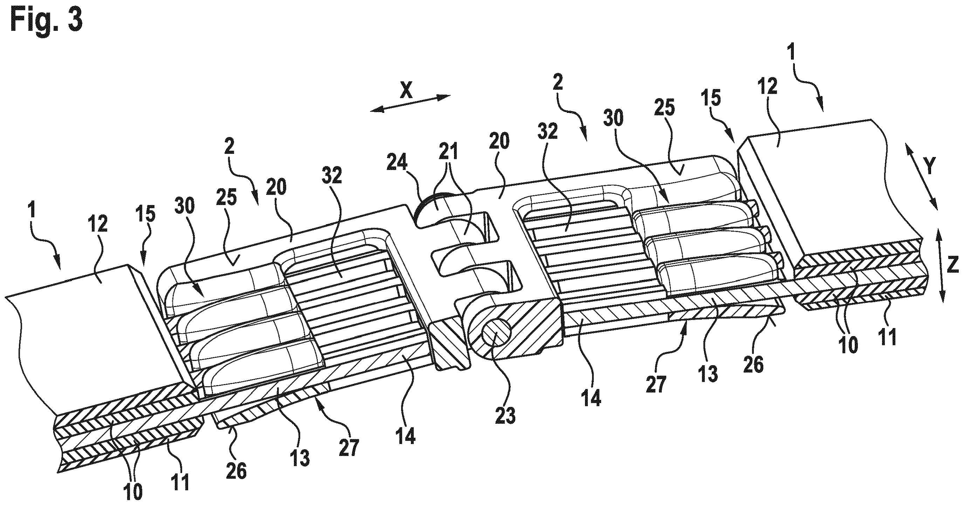

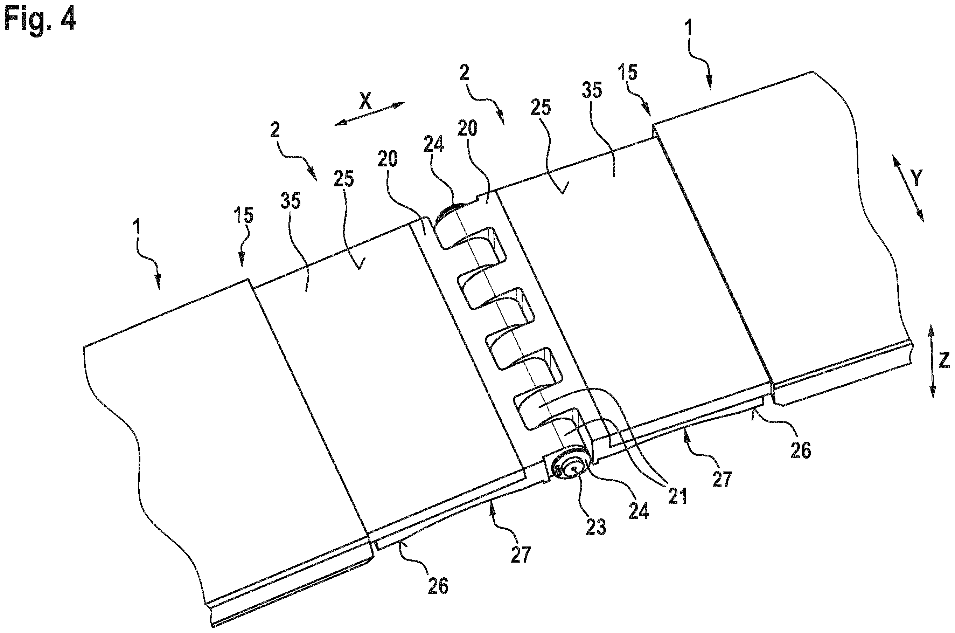

Die Fig. 1 zeigt eine perspektivische schematische Darstellung eines Verbindungselements 2 an sich gemäß einem ersten Ausführungsbeispiel von oben. Die Fig. 2 zeigt einen endlos geschlossenen Gurt 1 mit Verbindungselementen 2 gemäß dem ersten Ausführungsbeispiel von oben. Die Fig. 3 zeigt einen Schnitt in Längsrichtung X durch die Darstellung der Fig. 2. Die Fig. 4 zeigt den endlos geschlossenen Gurt 1 der Fig. 2 mit Abdeckungen 35.

Der Gurt 1 ist in einer Längsrichtung X endlos geschlossen. Hierzu senkrecht erstreckt sich eine Querrichtung Y, welche auch als Breite Y bezeichnet werden kann. Hierzu jeweils senkrecht erstreckt sich die Höhe Z, welche auch als Dicke Z bezeichnet werden kann. Diese Richtungsangaben in kartesischen Koordinaten gelten entsprechend für ein Verbindungselement 2, welches in der Fig. 1 einzeln dargestellt ist.

Das Verbindungselement 2 weist einen Grundkörper 20 auf, welcher aus einem harten oder härtbaren Stahl besteht. Der Grundkörper 20 weist an seiner einen Kante in Längsrichtung X mehrere zinnenartige Vorsprünge 21 auf, welche jeweils in Querrichtung Y verlaufende Querbohrungen 22 aufweisen. Der Grundkörper 20 weist eine gurtäußere Seite 25 auf, welche die Oberseite 25 des Grundkörpers 20 bildet. Der Grundkörper 20 weist ferner eine gurtinnere Seite 26 auf, welche die Unterseite 26 des Grundkörpers 20 bildet. In diesem ersten Ausführungsbeispiel weist die Unterseite 26 des Gurtkörpers 20 eine Einbuchtung 27 auf, welche halbkreisförmig ausgebildet ist und in ihrem Radius dem äußeren Radius z.B. einer Trommel entspricht, um die der Gurt 1 umlaufend kann.

Das Verbindungselement 2 weist ferner eine Klemmkörperaufnahme 31 auf, welche als rechteckige Aussparung innerhalb des Grundkörpers 20 ausgebildet ist (vgl. Fig. 1). Die Klemmkörperaufnahme 31 ist zur Oberseite 25 und zur Unterseite 26 hin offen ausgebildet. Von der Klemmkörperaufnahme 31 erstrecken sich mehrere Festigkeitsträgerdurchführungen 30 in Längsrichtung X in entgegengesetzter Richtung zu den zinnenartigen Vorsprüngen 21 durch den Grundkörper 20 hindurch und sind zum Gurt 1 hin aufgeweitet ausgebildet. Die Festigkeitsträgerdurchführungen 30 sind in diesem ersten Ausführungsbeispiel in Form von Nuten 30 ausgeführt.

In der Klemmkörperaufnahme 31 ist ein entsprechend geformter Klemmkörper 32 durch Verpressen geklemmt (vgl. Fig. 2 und 3). Innerhalb des Klemmkörpers 32 sind die Enden 14 von Festigkeitsträgern 13 in Form von Stahlseilen 13 durch Verpressen geklemmt (vgl. insbesondere Fig. 3). Die Stahlseile 13 sind hierzu an ihren Enden 14 von dem Material eines elastomeren Grundkörpers 10 des Gurtes 1 freigelegt. Der elastomere Grundkörper 10 weist in der Höhe Z eine untere elastomere Deckschicht 11 und eine obere elastomere Deckschicht 12 auf. Die freigelegten Enden 14 der Stahlseile 13 mit dem Klemmkörper 32 sowie dem Verbindungselement 2 bilden gemeinsam das Gurtende 15. Die beiden Verbindungselemente 2 zweier Gurtenden 15 desselben Gurts 1 oder zweier Gurtsegmente 1 sind mittels eines Kopplungsstabs 23 durch ihre Querbohrungen 22 miteinander gelenksartig verbunden. Der Kupplungsstab 23 wird in dieser Position in Querrichtung Y beidseitig durch Kopplungsstabsicherungen 24 gesichert.

Erfindungsgemäß werden die Enden 14 der Stahlseile 13 in einem gemeinsamen Klemmkörper 23 durch Verpressen geklemmt. Das Material des Klemmkörpers 32 ist hierzu entsprechend plastisch gut verformbar ausgebildet, so dass es gut verpresst und eine sichere und haltbare kraftschlüssige Verbindung zwischen dem Klemmkörper 32 und den Enden 14 der Stahlseile 13 hergestellt werden kann. Gleichzeitig ist das Material des Klemmkörpers 32 hart genug ausgebildet, um diese kraftschlüssige Verbindung sicher beibehalten zu können. Hierzu kann ein weicher Stahl wie z.B. V4A verwendet werden. Das Verpressen der Enden 14 der Stahlseile 13 in dem Klemmkörper 32 kann hierbei unabhängig von dem Verbindungselement 2 erfolgen, so dass die Enden 14 der Stahlseile 13 mit verpresstem Klemmkörper 32 gemeinsamen in das Verbindungselement 2 eingelegt werden können. Hierbei wird der Klemmkörper 32 durch die Klemmkörperaufnahme 31 aufgenommen. Die Stahlseile 13 können von oben in die Nuten 30 eingelegt werden. Der Klemmkörper 32 wird dann innerhalb der Klemmkörperaufnahme 31 mit dieser bzw. dem Verbindungselement 2 verpresst, so dass der Klemmkörper 32kraftschlüssig in der Klemmkörperaufnahme 31 gehalten werden kann. Auf diese Weise kann erfindungsgemäß die in Längsrichtung X wirkende Zugkraft des Gurtes 1 von den Stahlseilen 13 über die Klemmkörper 32 auf die Verbindungselemente 2 kraftschlüssig übertragen werden. Die Verbindungselemente 2 sind hierzu aus einem zugfesten Material wie z.B. einem gehärteten Stahl ausgebildet.

Um die Klemmkörper 32 sowie die eingelegten Stahlseile 13 vor äußeren Einflüssen besser schützen zu können, sind diese von oben mit Abdeckungen 35 versehen (vgl. Fig. 4). Diese Abdeckungen 35 können z.B. durch einen Rastmechanismus an den seitlichen Kanten in Querrichtung Y der Verbindungselemente 2 befestigt sein.

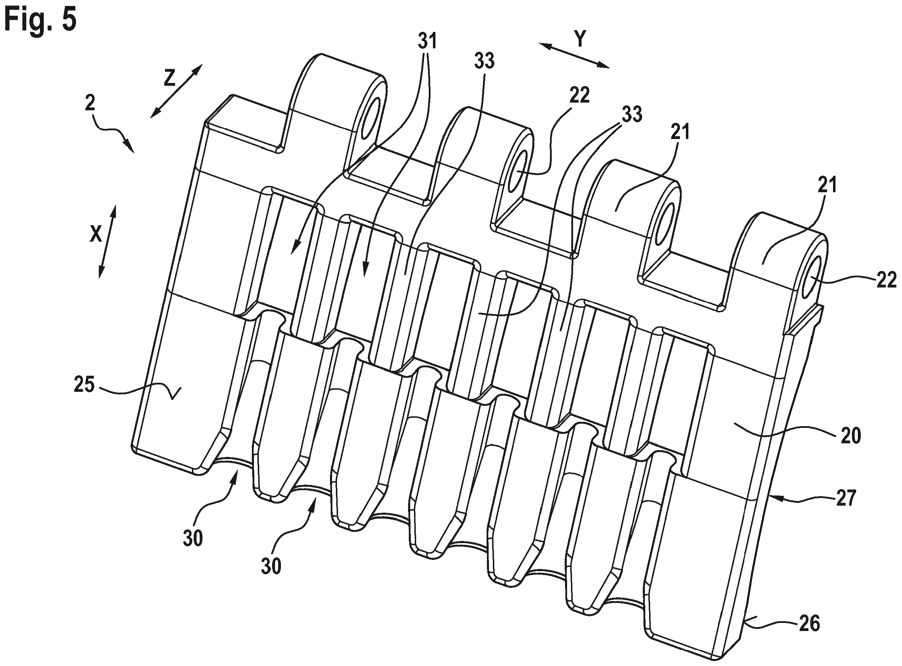

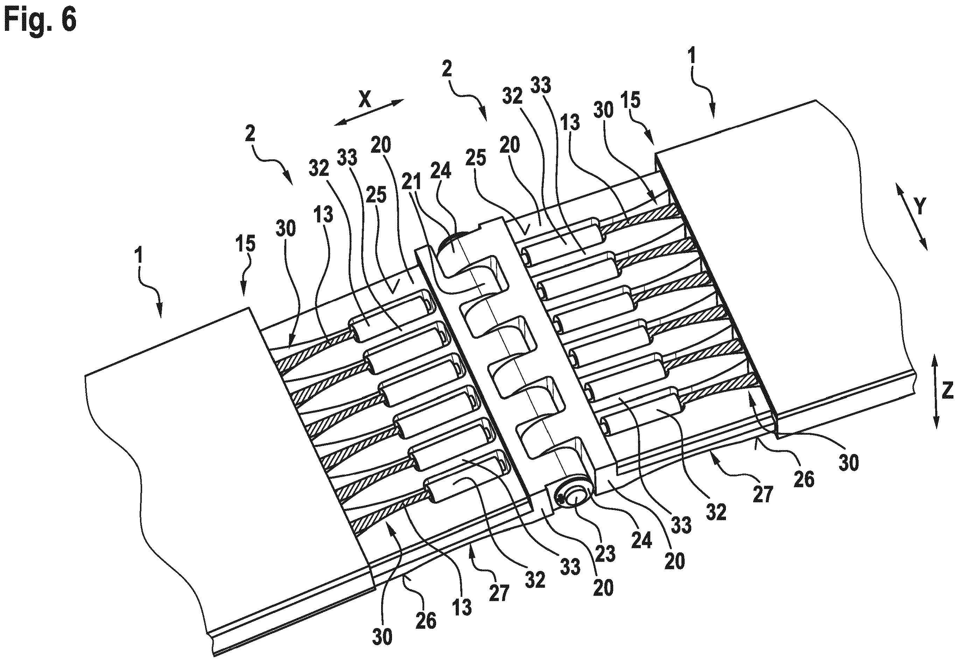

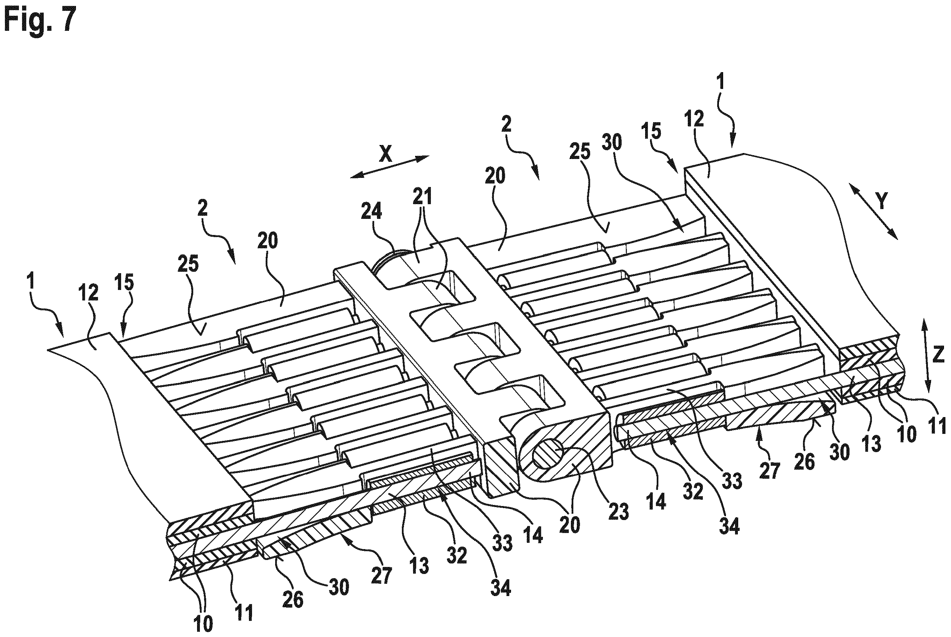

Die Fig. 5 zeigt eine perspektivische schematische Darstellung eines Verbindungselements 2 an sich gemäß einem zweiten Ausführungsbeispiel von oben. Die Fig. 6 zeigt einen endlos geschlossenen Gurt 1 mit Verbindungselementen 2 gemäß dem zweiten Ausführungsbeispiel von oben. Die Fig. 7 zeigt einen Schnitt in Längsrichtung X durch die Darstellung der Fig. 6.

Das Verbindungselement 2 gemäß dem zweiten Ausführungsbeispiel unterscheidet sich dadurch vom Verbindungselement 2 gemäß dem ersten Ausführungsbeispiel, dass die Klemmkörperaufnahme 31 durch mehrere in Längsrichtung X ausgebildete Stege 33 in mehrere einzelne Klemmkörperaufnahmen 31 geteilt ist. Die Stege 33 können Kräfte in Längsrichtung X übertragen und hierdurch einem Verzug des Verbindungselements 2 aufgrund von Belastungen in Längsrichtung X entgegenwirken. Ferner kann jeweils ein in Querrichtung Y seitliches Verpressen jedes einzelnen Klemmkörpers 32 mit dem Verbindungselement 2 bzw. dessen Stegen 33 erfolgen, wodurch die Klemmkraft pro Stahlseil 13 erhöht und damit die kraftschlüssige Verbindung insgesamt verbessert werden kann.

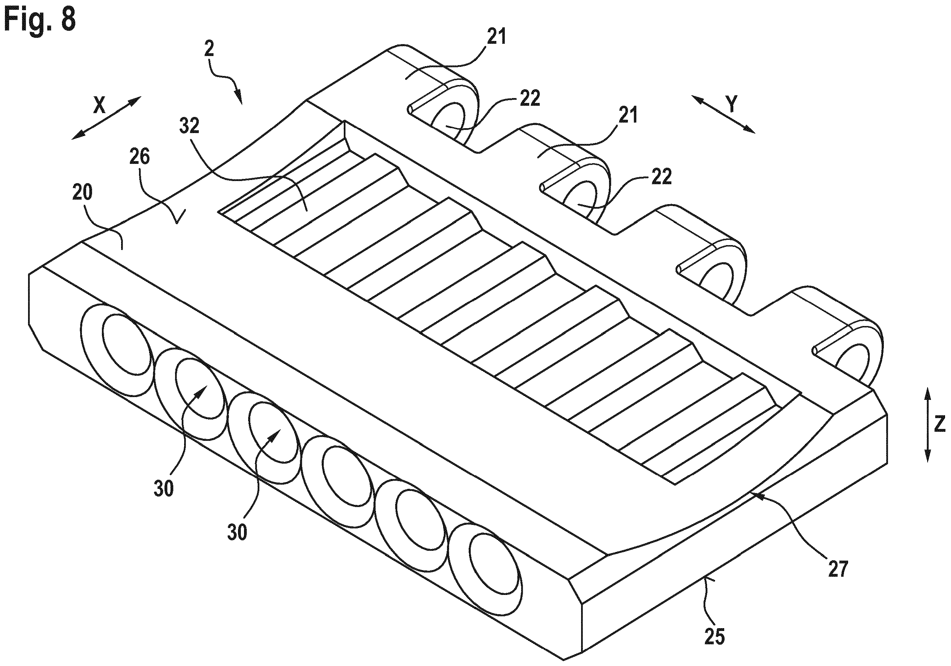

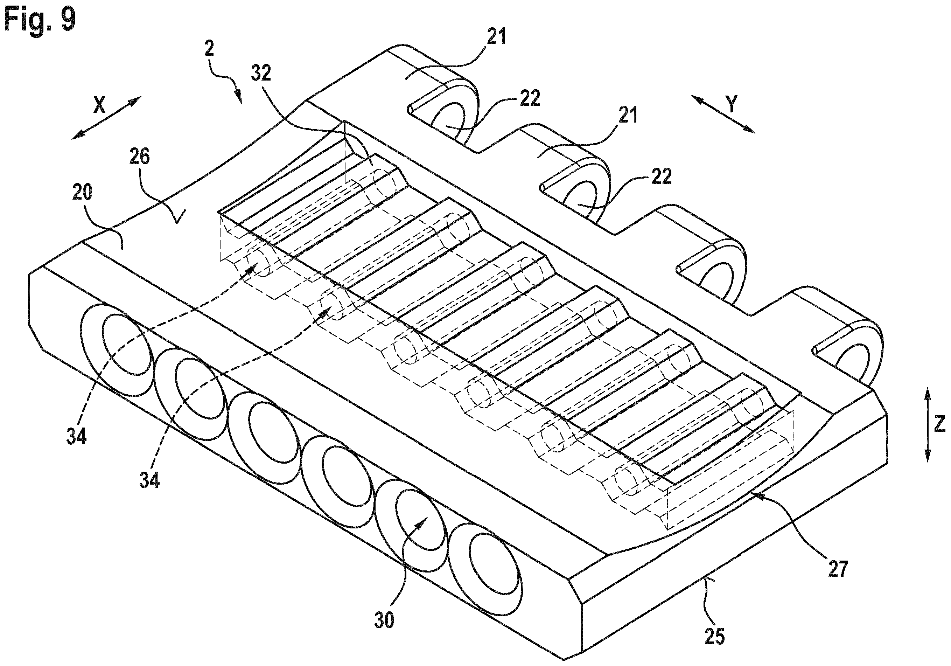

Die Fig. 8 zeigt eine perspektivische schematische Darstellung eines Verbindungselements 2 mit Klemmkörper 32 gemäß einem dritten Ausführungsbeispiel von unten. Die Fig. 9 zeigt eine durchsichtige Darstellung der Fig. 8.

Das Verbindungselement 2 gemäß dem dritten Ausführungsbeispiel unterscheidet sich dadurch von den Verbindungselementen 2 gemäß den vorherigen beiden Ausführungsbeispielen, dass die Festigkeitsträgerdurchführungen 30 in Form von Bohrungen 30 durch den Grundkörper 20 ausgeführt sind. Hierdurch kann die Stabilität des Verbindungselements 2 erhöht werden, weil die auf die Stahlseile 13 wirkenden Kräfte ringsherum um die Bohrungen 30 gleichmäßig übertragen werden können. Jedoch ist es bei der Montage erforderlich, die Enden 14 der Stahlseile 13 durch die Bohrungen 30 hindurch in die Festigkeitsträgeraufnahmen 34 einzuführen (vgl. Fig. 9). Hierzu ist der Klemmkörper 32 zuvor in der Klemmkörperaufnahme 31 zu positionieren. Ferner muss das Verpressen der Enden 14 der Stahlseile 13 im Klemmkörper 32 sowie gleichzeitig des Klemmkörpers 32 mit dem Verbindungselement 2 in dem Verbindungselement 2 bzw. dessen Klemmkörperaufnahme 31 erfolgen. Hierzu ist die Klemmkörperaufnahme 31 in der Höhe Z nach oben und nach unten offen ausgebildet, damit ein Presswerkzeug von einer Seite gegen eine Werkstückaufnahme von der anderen Seite die Presskraft ausüben kann.

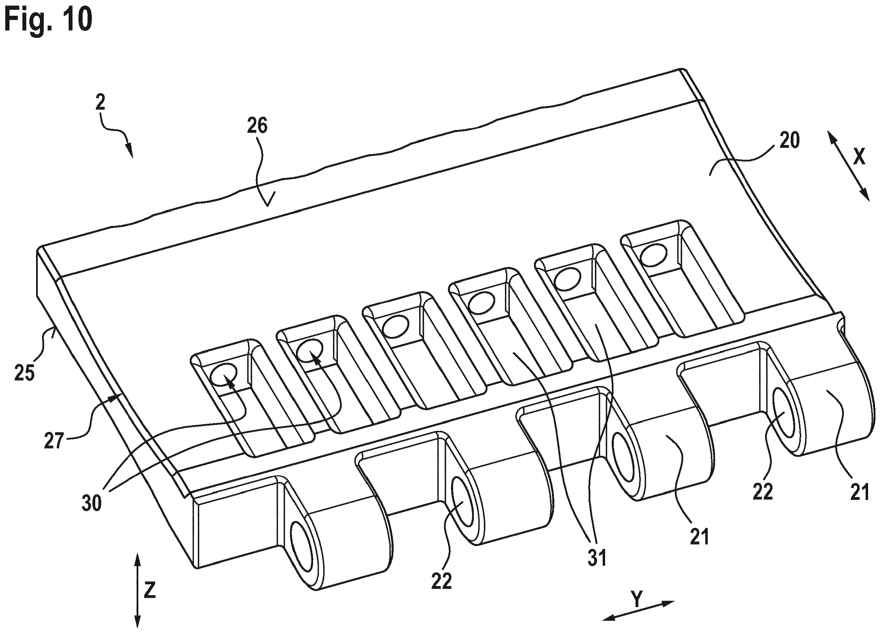

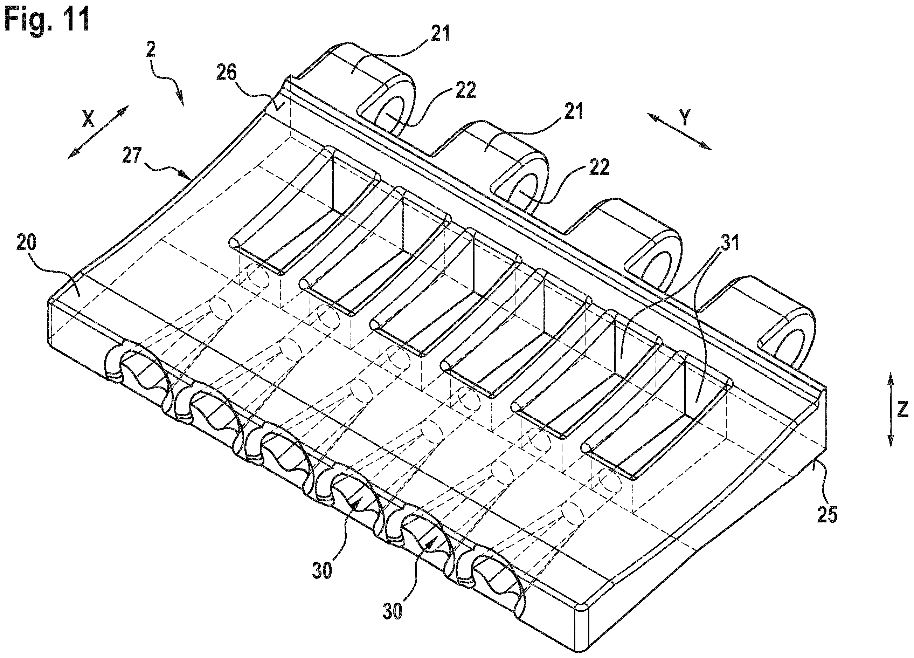

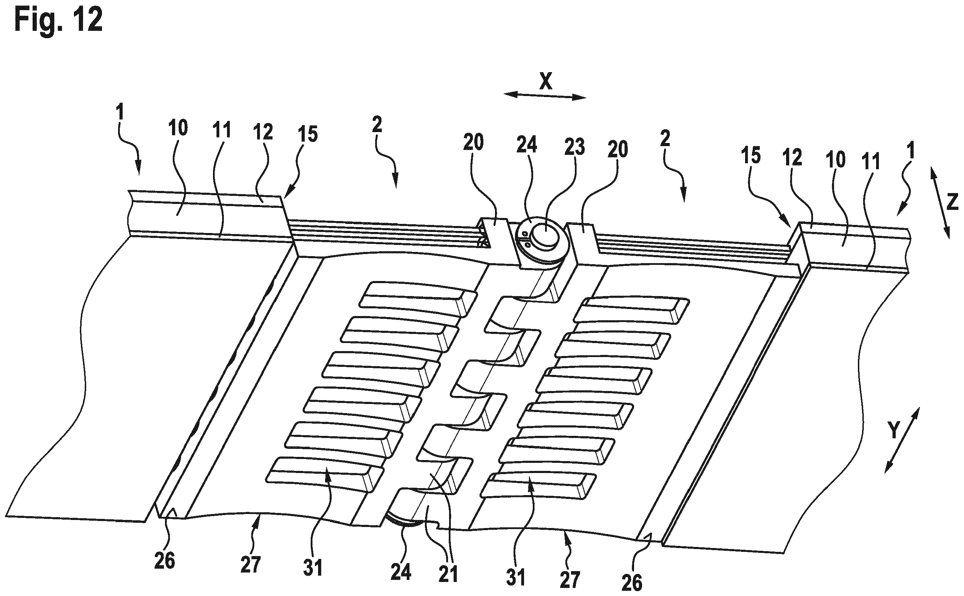

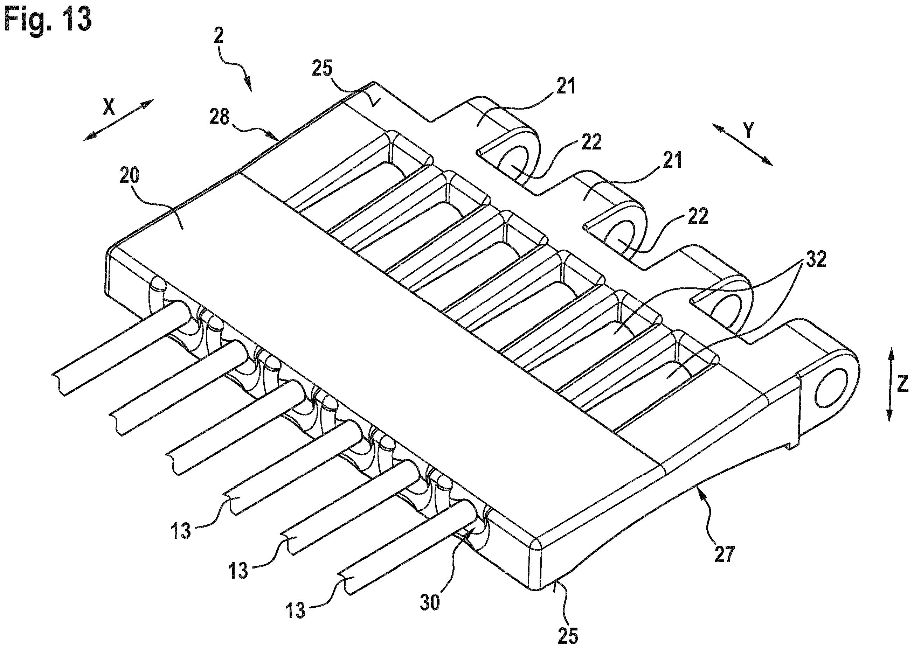

Die Fig. 10 zeigt eine perspektivische schematische Darstellung eines Verbindungselements 2 an sich gemäß einem vierten Ausführungsbeispiel von unten. Die Fig. 11 zeigt eine durchsichtige Darstellung der Fig. 10. Die Fig. 12 zeigt einen endlos geschlossenen Gurt 1 mit Verbindungselementen 2 gemäß dem vierten Ausführungsbeispiel von unten. Die Fig. 13 zeigt eine perspektivische schematische Darstellung des Verbindungselements 2 gemäß dem vierten Ausführungsbeispiel mit Festigkeitsträgern 13 und Klemmkörpern 32 von oben.

Das Verbindungselement 2 gemäß dem vierten Ausführungsbeispiel unterscheidet sich dadurch von den Verbindungselementen 2 gemäß den vorherigen drei Ausführungsbeispielen, dass sowohl die Festigkeitsträgerdurchführungen 30 in Form von Bohrungen 30 durch den Grundkörper 20 ausgebildet und die Stege 33 zwischen den einzelnen Klemmkörperaufnahmen 31 vorhanden sind.

### Bezugszeichenliste

### (Teil der Beschreibung)

- X: Längsrichtung des Gurtes 1 bzw. Gurtsegments 1
- Y: Querrichtung bzw. Breite des Gurtes 1 bzw. Gurtsegments 1
- Z: Höhe bzw. Dicke des Gurtes 1 bzw. Gurtsegments 1

- 1: Gurt bzw. Gurtsegment
- 10: elastomerer Grundkörper
- 11: untere elastomere Deckschicht
- 12: obere elastomere Deckschicht
- 13: Festigkeitsträger bzw. Stahlseile
- 14: Ende der Festigkeitsträger 13
- 15: Gurtende bzw. Gurtsegmentende
- 2: Verbindungselemente
- 20: Grundkörper
- 21: zinnenartige Vorsprünge
- 22: Querbohrungen der zinnenartigen Vorsprünge
- 23: Kopplungsstab
- 24: Kopplungsstabsicherung
- 25: gurtäußere Seite bzw. Oberseite des Grundkörpers 20
- 26: gurtinnere Seite bzw. Unterseite des Grundkörpers 20
- 27: Einbuchtung der Unterseite 26
- 30: Festigkeitsträgerdurchführung des Grundkörpers 20, Bohrung bzw. Nut
- 31: Klemmkörperaufnahme
- 32: Klemmkörper
- 33: Stege des Grundkörpers 20 in Längsrichtung X
- 34: Festigkeitsträgeraufnahme des Klemmkörpers 32 bzw. der Klemmkörper 32
- 35: Abdeckung

## Patentansprüche

1. Gurt (1) oder Gurtsegment (1), mit
einer Mehrzahl von in Längsrichtung (X) verlaufenden und parallel zueinander angeordneten Festigkeitsträgern (13), und
einem Verbindungselement (2), welches ein Ende (15) des Gurtes (1) bzw. des Gurtsegments (1) bildet und zur Verbindung mit einem weiteren Verbindungselement (2) des anderen Endes (15) des Gurts (1) bzw. mit einem Ende (15) eines weiteren Gurtsegments (1) ausgebildet ist,
wobei die Enden (14) der Festigkeitsträger (13) von dem Verbindungselement (2) gehalten werden,
**dadurch gekennzeichnet, dass**
die Enden (14) der Festigkeitsträger (13) mit wenigstens einem Klemmkörper (32) kraftschlüssig verbunden sind,
wobei der Klemmkörper (32) von dem Verbindungselement (2) wenigstens in Längsrichtung (X) kraftschlüssig gehalten werden kann.

2. Gurt (1) oder Gurtsegment (1) gemäß Anspruch 1,
wobei das Material des Klemmkörpers (32) relativ zum Material des Verbindungselements (2) weicher ist.

3. Gurt (1) oder Gurtsegment (1) gemäß Anspruch 1 oder 2,
wobei wenigstens zwei Enden (14) der Festigkeitsträger (13) mit einem gemeinsamen Klemmkörper (32) kraftschlüssig verbunden sind.

4. Gurt (1) oder Gurtsegment (1) gemäß Anspruch 1 oder 2,
wobei wenigstens zwei Enden (14) der Festigkeitsträger (13) jeweils einzeln mit einem Klemmkörper (32) kraftschlüssig verbunden sind.

5. Gurt (1) oder Gurtsegment (1) gemäß einem der vorherigen Ansprüche,
wobei das Verbindungselement (2) wenigstens eine Klemmkörperaufnahme (31) aufweist, in der wenigstens ein mit einem Klemmkörper (32) versehenes Ende (14) eines Festigkeitsträgers (13) aufgenommen und wenigstens in Längsrichtung (X) kraftschlüssig gehalten werden kann.

6. Gurt (1) oder Gurtsegment (1) gemäß Anspruch 5,
wobei die Klemmkörperaufnahme (31) ausgebildet ist, einen Klemmkörper (32) aufzunehmen, mit dem die Enden (14) mehrerer Festigkeitsträger (13) kraftschlüssig verbunden sind.

7. Gurt (1) oder Gurtsegment (1) gemäß Anspruch 5,
wobei die Klemmkörperaufnahme (31) ausgebildet ist, einen Klemmkörper (32) aufzunehmen, mit dem das Ende (14) eines Festigkeitsträgers (13) kraftschlüssig verbunden ist.

8. Gurt (1) oder Gurtsegment (1) gemäß einem der Ansprüche 5 bis 7,
wobei das Verbindungselement (2) wenigstens zwei Klemmkörperaufnahmen (31) aufweist, in denen jeweils wenigstens ein mit einem Klemmkörper (32) versehenes Ende (14) eines Festigkeitsträgers (13) aufgenommen und wenigstens in Längsrichtung (X) kraftschlüssig gehalten werden kann,
wobei die beiden Klemmkörperaufnahmen (31) in Querrichtung (Y) durch einen in Längsrichtung (X) verlaufenden Steg (33) voneinander getrennt sind.

9. Gurt (1) oder Gurtsegment (1) gemäß einem der Ansprüche 5 bis 8,
wobei das Verbindungselement (2) wenigstens eine Festigkeitsträgerdurchführung (30) aufweist, durch die wenigstens ein Festigkeitsträger (13) in Längsrichtung (X) in eine Klemmkörperaufnahme (31) geführt werden kann.

10. Gurt (1) oder Gurtsegment (1) gemäß Anspruch 9,
wobei die Festigkeitsträgerdurchführung (30) als Bohrung (30) durch das Verbindungselement (2) ausgebildet ist.

11. Gurt (1) oder Gurtsegment (1) gemäß Anspruch 9,
wobei die Festigkeitsträgerdurchführung (30) als Nut (30) durch das Verbindungselement (2) ausgebildet ist.

12. Gurt (1) oder Gurtsegment (1) gemäß Anspruch 11, ferner mit
einer Abdeckung (35), welche die Nut (30) und/oder die Klemmkörperaufnahme (31) senkrecht zur Längsrichtung (X) verschließen kann.

13. Gurt (1) oder Gurtsegment (1) gemäß einem der Ansprüche 9 bis 12,
wobei die Festigkeitsträgerdurchführung (30) in Längsrichtung (X) in entgegengesetzter Richtung zu den Enden (14) der Festigkeitsträger (13) aufgeweitet ausgebildet ist.

14. Gurt (1) oder Gurtsegment (1) gemäß einem der vorherigen Ansprüche,
wobei der Gurt (1) bzw. das Gurtsegment (1) einen elastomeren Grundkörper (10) aufweist, in dem die Festigkeitsträger (13) eingebettet sind,
wobei die Enden (14) der Festigkeitsträger (13) von dem Material des elastomeren Grundkörpers (10) freigelegt sind.

15. Gurt (1) oder Gurtsegment (1) gemäß einem der vorherigen Ansprüche,
wobei das Verbindungselement (2) an seiner gurtinneren Seite (26) eine halbkreisförmige Einbuchtung (27) aufweist.

## Claims

1. Belt (1) or belt segment (1), having
a plurality of strength members (13) that extend in a longitudinal direction (X) and are arranged parallel to one another, and
a connecting element (2) which forms one end (15) of the belt (1) or belt segment (1) and is configured to be connected to a further connecting element (2) at the other end (15) of the belt (1) or to one end (15) of a further belt segment (1),
wherein the ends (14) of the strength members (13) are held by the connecting element (2),
**characterized in that**
the ends (14) of the strength members (13) are connected to at least one clamping body (32) in a force-fitting manner,
wherein the clamping body (32) can be held by the connecting element (2) in a force-fitting manner at least in the longitudinal direction (X).

2. Belt (1) or belt segment (1) according to Claim 1, wherein the material of the clamping body (32) is softer than the material of the connecting element (2) .

3. Belt (1) or belt segment (1) according to Claim 1 or 2,
wherein at least two ends (14) of the strength members (13) are connected to a common clamping body (32) in a force-fitting manner.

4. Belt (1) or belt segment (1) according to Claim 1 or 2,
wherein at least two ends (14) of the strength members (13) are each connected individually to a clamping body (32) in a force-fitting manner.

5. Belt (1) or belt segment (1) according to one of the preceding claims,
wherein the connecting element (2) has at least one clamping body receptacle (31) in which at least one end (14), provided with a clamping body (32), of a strength member (13) can be received and held in a force-fitting manner at least in the longitudinal direction (X),

6. Belt (1) or belt segment (1) according to Claim 5,
wherein the clamping body receptacle (31) is configured to receive a clamping body (32) to which the ends (14) of a plurality of strength members (13) are connected in a force-fitting manner.

7. Belt (1) or belt segment (1) according to Claim 5,
wherein the clamping body receptacle (31) is configured to receive a clamping body (32) to which the end (14) of one strength member (13) is connected in a force-fitting manner.

8. Belt (1) or belt segment (1) according to one of Claims 5 to 7,
wherein the connecting element (2) has at least two clamping body receptacles (31) in which in each case at least one end (14), provided with a clamping body (32), of a strength member (13) can be received and held in a force-fitting manner at least in the longitudinal direction (X),
wherein the two clamping body receptacles (31) are separated from one another in a transverse direction (Y) by a web (33) extending in the longitudinal direction (X).

9. Belt (1) or belt segment (1) according to one of Claims 5 to 8,
wherein the connecting element (2) has at least one strength member leadthrough (30) through which at least one strength member (13) can be passed in the longitudinal direction (X) into a clamping body receptacle (31).

10. Belt (1) or belt segment (1) according to Claim 9,
wherein the strength member leadthrough (30) is configured as a bore (30) through the connecting element (2).

11. Belt (1) or belt segment (1) according to Claim 9,
wherein the strength member leadthrough (30) is configured as a groove (30) through the connecting element (2).

12. Belt (1) or belt segment (1) according to Claim 11, further having
a cover (35) which can close the groove (30) and/or the clamping body receptacle (31) perpendicularly to the longitudinal direction (X).

13. Belt (1) or belt segment (1) according to one of Claims 9 to 12,
wherein the strength member leadthrough (30) is configured in a widened manner in the longitudinal direction (X) in the direction away from the ends (14) of the strength members (13).

14. Belt (1) or belt segment (1) according to one of the preceding claims,
wherein the belt (1) or belt segment (1) has an elastomeric main body (10) in which the strength members (13) are embedded,
wherein the ends (14) of the strength members (13) are not covered by the material of the elastomeric main body (10).

15. Belt (1) or belt segment (1) according to one of the preceding claims,
wherein the connecting element (2) has a semicircular concavity (27) on the internal belt side (26) thereof.

## Revendications

1. Sangle (1) ou segment de sangle (1), comprenant une pluralité de renforts (13) s'étendant dans la direction longitudinale (X) et disposés parallèlement les uns aux autres, et
un élément de liaison (2) qui forme une extrémité (15) de la sangle (1) ou du segment de sangle (1) et qui est conçu pour être relié à un autre élément de liaison (2) de l'autre extrémité (15) de la sangle (1) ou à une extrémité (15) d'un autre segment de sangle (1),
les extrémités (14) des renforts (13) étant maintenues par l'élément de liaison (2),
**caractérisée en ce que**
les extrémités (14) des renforts (13) sont reliées en force à au moins un corps de serrage (32),
le corps de serrage (32) pouvant être maintenu en force par l'élément de liaison (2) au moins dans la direction longitudinale (X).

2. Sangle (1) ou segment de sangle (1) selon la revendication 1,
la matière du corps de serrage (32) étant plus souple que la matière de l'élément de liaison (2).

3. Sangle (1) ou segment de sangle (1) selon la revendication 1 ou 2,
au moins deux extrémités (14) des renforts (13) étant reliées en force à un corps de serrage commun (32).

4. Sangle (1) ou segment de sangle (1) selon la revendication 1 ou 2,
au moins deux extrémités (14) des renforts (13) étant chacune reliées individuellement en force à un corps de serrage (32).

5. Sangle (1) ou segment de sangle (1) selon l'une des revendications précédentes,
l'élément de liaison (2) comportant au moins un logement de corps de serrage (31) dans lequel au moins une extrémité (14), munie d'un corps de serrage (32), d'un renfort (13) peut être reçue et maintenue en force au moins dans la direction longitudinale (X).

6. Sangle (1) ou segment de sangle (1) selon la revendication 5,
le logement de corps de serrage (31) étant conçu pour recevoir un corps de serrage (32) auquel les extrémités (14) d'une pluralité de renforts (13) sont reliées en force.

7. Sangle (1) ou segment de sangle (1) selon la revendication 5,
le logement de corps de serrage (31) étant conçu pour recevoir un corps de serrage (32) auquel l'extrémité (14) d'un renfort (13) est reliée en force.

8. Sangle (1) ou segment de sangle (1) selon l'une des revendications 5 à 7,
l'élément de liaison (2) comportant au moins deux logements de corps de serrage (31), dans chacun desquels au moins une extrémité (14), pourvue d'un corps de serrage (32), d'un renfort (13) peut être reçue et maintenue en force au moins dans la direction longitudinale (X),
les deux logements de corps de serrage (31) étant séparés l'un de l'autre dans la direction transversale (Y) par une nervure (33) qui s'étend dans la direction longitudinale (X).

9. Sangle (1) ou segment de sangle (1) selon l'une des revendications 5 à 8, l'élément de liaison (2) comportant au moins un passage de renfort (30) à travers lequel au moins un renfort (13) peut être guidé dans la direction longitudinale (X) jusque dans un logement de corps de serrage (31).

10. Sangle (1) ou segment de sangle (1) selon la revendication 9,
le passage de renfort (30) étant conçu comme un perçage (30) ménagé à travers l'élément de liaison (2).

11. Sangle (1) ou segment de sangle (1) selon la revendication 9,
le passage de renfort (30) étant conçu comme une rainure (30) ménagée à travers l'élément de liaison (2) .

12. Sangle (1) ou segment de sangle (1) selon la revendication 11, comprenant en outre un capot (35) qui peut fermer la rainure (30) et/ou le logement de corps de serrage (31) perpendiculairement à la direction longitudinale (X).

13. Sangle (1) ou segment de sangle (1) selon l'une des revendications 9 à 12, le passage de renfort (30) étant conçu pour être étiré dans la direction longitudinale (X) dans le sens opposé aux extrémités (14) des renforts (13).

14. Sangle (1) ou segment de sangle (1) selon l'une des revendications précédentes,
la sangle (1) ou le segment de sangle (1) comportant un corps de base élastomère (10) dans lequel les renforts (13) sont incorporés,
les extrémités (14) des renforts (13) étant dénudées de la matière du corps de base élastomère (10).

15. Sangle (1) ou segment de sangle (1) selon l'une des revendications précédentes, l'élément de liaison (2) comportant une échancrure semi-circulaire (27) sur son côté (26) qui est intérieur à la sangle.
